(19) Europäisches Patentamt / European Patent Office / Office européen des brevets

(11) **EP 4 009 072 A1**

(12) **EUROPÄISCHE PATENTANMELDUNG**

(43) Veröffentlichungstag:
**08.06.2022 Patentblatt 2022/23**

(21) Anmeldenummer: **21212923.3**

(22) Anmeldetag: **07.12.2021**

(51) Internationale Patentklassifikation (IPC):
**G01S 7/48** (2006.01)    **G01C 21/30** (2006.01)
**G01S 13/86** (2006.01)    **G01S 13/931** (2020.01)
**G01S 15/86** (2020.01)    **G01S 15/931** (2020.01)
**G01S 17/86** (2020.01)    **G01S 17/931** (2020.01)
**G06V 20/58** (2022.01)    **G01S 5/02** (2010.01)

(52) Gemeinsame Patentklassifikation (CPC):
**G01S 7/4808; G01C 21/30; G01S 5/0244;**
**G01S 7/4802; G01S 13/86; G01S 13/931;**
**G01S 15/86; G01S 15/931; G01S 17/86;**
**G01S 17/931; G06V 20/58**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.12.2020 DE 102020132397**

(71) Anmelder: **IAV GmbH**
**Ingenieurgesellschaft Auto und Verkehr**
**10587 Berlin (DE)**

(72) Erfinder:
• **Pucks, Fabian**
**12167 Berlin (DE)**

• **Blaschek, Roman**
**15741 Bestensee (DE)**
• **Rechenberger, Stefan**
**12107 Berlin (DE)**
• **Hussein, Ahmed**
**10243 Berlin (DE)**
• **Moreno Olivo, Francisco Miguel**
**28913 Leganes (ES)**

(74) Vertreter: **Fukala, Georg**
**IAV GmbH**
**Ingenieurgesellschaft Auto und Verkehr**
**Entwicklungszentrum Chemnitz/Stollberg**
**Auer Straße 54**
**09366 Stollberg (DE)**

(54) **VERFAHREN, STEUERGERÄT UND FAHRZEUG ZUR VALIDIERUNG DER LOKALISIERUNG EINES FAHRZEUGES DURCH REFERENZIERUNG ZU STATISCHEN OBJEKTEN IM UMFELD**

(57) Computerimplementiertes Verfahren zur Validierung der von wenigstens einem Lokalisierungssystem ermittelten Ego-Position eines Fahrzeuges (V) basierend auf der Kombination der durch das wenigstens eine Lokalisierungssystem erzeugten Ego-Position in einem ersten Schritt (S1) mit dem durch die fahrzeuginterne Sensorik (10) erfassten Umfeld in einem zweiten Schritt (S2), durch Ermitteln der Beweglichkeit von wenigstens einem statischen Objekt des Umfeldes als ein Maß für die Ungenauigkeit des Lokalisierungssystems. Das Ermitteln der Beweglichkeit des statischen Umfeldes umfasst hierbei das Erfassen der Änderung der Position und/oder der Formgestalt von mindestens einer statischen Landmarke (LM), wobei die zum Fahrzeug (V) relative Position von wenigstens einem Bezugspunkt der statischen Landmarken (LM) mittels fahrzeuginterner Sensorik (10) von wenigstens zwei ortsunterschiedlichen Positionen (P1, P2) des Fahrzeuges (V) aus in einem dritten Schritt (S3) vermessen werden.

FIG. 5

**Beschreibung**

**Technisches Gebiet**

Die Erfindung betrifft das Gebiet der Positionsbestimmung von Fahrzeugen, insbesondere die Validierung eines oder mehrerer Lokalisierungssysteme, die eingerichtet sind, um die Position eines Fahrzeuges zu ermitteln.

**Stand der Technik**

Zur sicheren Fortbewegung von hochautomatisierten oder autonomen Fahrzeugen ist es zwingend erforderlich, die Ego-Position oder die Ego-Pose eines entsprechenden Fahrzeuges in Bezug auf ein definiertes Koordinatensystem oder eine digitale Karte, oder mit anderen Worten ein Bezugssystem, möglichst genau zu bestimmen. Als die Ego-Pose ist die Kombination der Position und der Ausrichtung des Fahrzeuges innerhalb des Bezugssystems zu verstehen. Die Position und Ausrichtung des Fahrzeuges sowie der Vorgang der Beschaffung jener Informationen ist unter dem Begriff der Lokalisierung bekannt. Die Lokalisierung der Ego-Pose kann durch globale externe Beobachtung, wie beispielsweise mittels "global positioning system" (GPS) oder GPS-RTK (GPS - "real time kinematic"), durch SLAM-Algorithmen ("simultanouse localization and mapping") mittels interner optischer und/oder akustischer Sensoren, wie "light detection and ranging" (LiDAR), "radio detection and ranging" (RADAR), Kameras, Ultraschall und weitere sowie durch eine Kombination aus globaler externer Beobachtung und interner Sensoren oder durch aktive Sensoren innerhalb einer räumlich definierten Umgebung erfolgen. Zur Validierung eines Systems, das eingerichtet ist, um die Lokalisierung eines Fahrzeuges vorzunehmen, werden in bekannter Art und Weise sekundäre Lokalisierungssysteme, oder mit anderen Worten Referenzsysteme angewendet, um die Ergebnisse der Lokalisierung beider Systeme miteinander zu vergleichen, wobei das Referenzsystem eine höhere Genauigkeit aufweisen sollte.

Aus der Offenlegungsschrift DE102018218492A1 ist bekannt, dass mehrere unabhängig voneinander arbeitende Lokalisierungssysteme eines Fahrzeuges parallel angewendet werden, wobei die einzelnen durch die jeweils unabhängigen Lokalisierungssysteme ermittelten Positionen miteinander verglichen werden, um bei relativen Abweichungen einzelner Lokalisierungssysteme untereinander einen Fehler oder eine erhöhte Ungenauigkeit jenes Systems zu bestimmen.

In der Offenlegungsschrift DE102018212133A1 ist ein Verfahren zur Optimierung der Genauigkeit eines globalen Lokalisierungssystems für eine Fahrzeugflotte offenbart, wobei der Abstand zu ortsfesten Landmarken durch mehrere Fahrzeuge von verschiedenen Positionen aus und mittels interner Sensoren gemessen sowie auf einen Server geladen wird, wobei der Server aus sämtlichen ermittelten Positionen einer Landmarke einen Mittelwert bildet und diese Information mit sämtlichen Fahrzeugen der Flotte teilt, sodass die Position jener Landmarke innerhalb des jeweiligen Bezugssystems der Fahrzeuge korrigiert wird.

Aus der Offenlegungsschrift US20200310460A1 ist es bekannt, mittels einer auf GPS basierenden Lokalisierung eines sich bewegenden Fahrzeuges dessen interne Sensoren zu überprüfen, wobei der Abstand und die Ausrichtung des Fahrzeuges zu mindestens zwei ortsfesten Landmarken an zwei Zeitpunkten sowohl mittels GPS als auch durch die internen Sensoren bestimmt sowie die Änderung des Abstandes und der Ausrichtung des Fahrzeuges zu den beiden Landmarken, jeweils für GPS und die internen Sensoren ermittelt sowie miteinander verglichen wird, um so auf ein Fehlverhalten eines internen Sensors zu schließen.

Aus der Offenlegungsschrift EP3643016A1 ist es bekannt, die Lokalisierung der Ego-Position eines Fahrzeuges von einem unabhängigen Lokalisierungssystem durch Vermessung dynamischer Objekte mittels interner Sensoren zu überprüfen, wobei durch die internen Sensoren zu einem ersten Zeitpunkt ein dynamisches Objekt erkannt und dessen Geschwindigkeit ermittelt, davon ausgehend die Position des dynamischen Objektes zu einem zweiten Zeitpunkt geschätzt sowie anschließend überprüft wird, ob die geschätzte Position mit der zum zweiten Zeitpunkt durch das unabhängige Lokalisierungssystem gemessenen Position übereinstimmt, um so eine Abweichung zwischen unabhängigem Lokalisierungssystem und interner Sensoren zu bestimmen.

Die aus dem Stand der Technik genannten Verfahren zur Validierung von Lokalisierungssystemen beruhen im Wesentlichen auf dem Vergleich der Ergebnisse des zu validierenden Systems mit den Ergebnissen von wenigstens einem Referenzsystem, wobei davon ausgegangen werden muss, dass das Referenzsystem eine höhere Genauigkeit und/oder ein messbares Fehlerverhalten aufweist. Dem Anwender eines entsprechenden Referenzsystems zur Validierung eines beispielsweise neu entwickelten oder in eine neue Anwendung integrierten Lokalisierungssystems steht nunmehr lediglich die angegebene Genauigkeit des Referenzsystems zur Bewertung der Genauigkeit des zu validierenden Lokalisierungssystems zur Verfügung, ohne jedoch die absolute Genauigkeit belegen zu können, da das Referenzsystem ebenfalls durch ein entsprechendes Verfahren validiert sein kann. Mit anderen Worten werden Lokalisierungssysteme lediglich mit einer Genauigkeit validiert, die dem relativen Fehler zu einem Referenzsystem entspricht. Entsprechend kann der Gesamtfehler der Lokalisierung Fehler bezüglich des erzeugten Bezugssystems, ausgehend von der zugehörigen Datenbasis, der Ego-Positionsermittlung selbst sowie innerhalb des Bezugssystems, der Messgenauigkeit und/oder der Kalibrierung von Sensoren, der systematischen Fehler sowie zeitliche Verschiebungen zwischen den Systemen umfassen.

**Offenbarung der Erfindung**

Der vorliegenden Erfindung liegt nunmehr die Aufgabe zu Grunde, eine verbesserte Validierung der Lokalisierung eines unbekannten Lokalisierungssystems bereitzustellen, wobei die Nachteile der Fehlerquellen eines Referenzsystems substituiert werden. Diese Aufgabe wird durch ein Verfahren gemäß dem Patentanspruch 1 sowie ein Steuergerät nach Patentanspruch 9 und ein Fahrzeug nach Patentanspruch 10 dadurch gelöst, dass eine Änderung der Position der ortsfesten Umgebung eines Fahrzeugs als ein Maß für den Gesamtfehler des zu validierenden Lokalisierungssystems durch interne Sensoren erfasst wird.

Die Intention der Erfindung besteht nunmehr in der Substitution eines zweiten Lokalisierungssystems als Referenzsystem durch das erfindungsgemäße Verfahren zur Validierung der Lokalisierung eines Fahrzeuges von einem ersten Lokalisierungssystem mittels fahrzeuginterner Sensoren. Hierbei wird eine durch das erste Lokalisierungssystem ermittelte Ego-Position des Fahrzeuges als exakt angenommen und das statische Umfeld bezüglich der Änderung der Position von statischen Objekten, ausgehend von dieser exakten Ego-Position, bewertet. Erfindungsgemäß werden statische Objekte aus dem Umfeld des Fahrzeuges während der Bewegung des Fahrzeuges und somit von verschiedenen Positionen durch die fahrzeuginternen Sensoren vermessen. Sollte die durch das erste Lokalisierungssystem ermittelte Ego-Position des Fahrzeuges, wie angenommen, fehlerfrei sein, so sollte sich die Position der statischen Objekte des Umfeldes innerhalb des Bezugssystems nicht oder nur gering und in definiertem Ausmaß sowie unter Berücksichtigung der bekannten Messfehler der fahrzeuginternen Sensoren und der zeitlichen Verschiebung zwischen dem Lokalisierungssystem und der erfindungsgemäßen Validierung verändern. Erfindungsgemäß vorteilhaft ist nunmehr jede weitere über das Maß der bekannten Messfehler der fahrzeuginternen Sensoren und gegebenenfalls der genannten zeitlichen Verschiebung hinausreichende Abweichung der Position von statischen Objekten als ein Maß für die Ungenauigkeit des ersten Lokalisierungssystems zu betrachten. Der nach solcherart bestimmbare Gesamtfehler in der Ermittlung der Ego-Position durch das erste Lokalisierungssystem eröffnet die Möglichkeit, die Genauigkeit der Lokalisierung in Abhängigkeit der Position des Fahrzeuges zu bewerten sowie kritische Gebiete zu identifizieren, in denen die Genauigkeit des entsprechenden Lokalisierungssystems mit technischen Mitteln entsprechend von gegebenen Anforderungen angepasst werden muss.

Das erfindungsgemäße Verfahren bietet den Vorteil, dass zusätzliche Referenzsysteme zur Validierung eines Lokalisierungssystems entfallen sowie dass das Erzeugen einer digitalen Karte als Bezugssystem nicht erforderlich ist, wodurch die sich daraus ergebenden Fehlerquellen ausgeschlossen werden. Weiterhin müssen statische Objekte des Umfeldes, welche zur Ausführung des erfindungsgemäßen Verfahrens hinzugezogen werden, nicht vorbestimmt oder in einem digitalen Bezugssystem hinterlegt sein, da sich die erfindungsgemäße Validierung auf das unmittelbare Umfeld des Fahrzeuges bezieht und das vorhandene Bezugssystem aus dem zu überprüfenden Lokalisierungssystem zu Nutze macht. Im weiteren Verlauf erfolgt die ausführliche Darstellung der Beschreibung und der Vorteile der Erfindung. Zum besseren Verständnis und als Unterstützung der Beschreibung wird sich auf folgende Abbildungen bezogen. Hierbei zeigen

Fig. 1    den schematischen Aufbau eines Fahrzeuges zur Ausführung der Validierung der Lokalisierung,

Fig. 2    den Prozessablauf des erfindungsgemäßen Verfahrens.

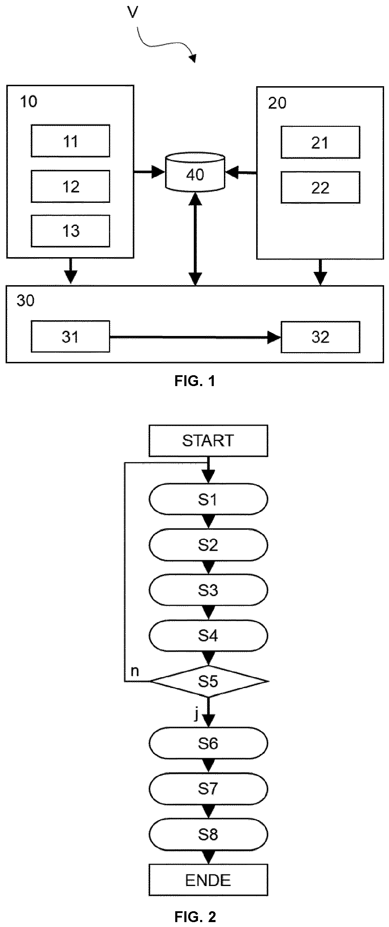

Bezugnehmend auf Fig. 1 kann das erfindungsgemäße Verfahren innerhalb eines nicht dargestellten Fahrzeuges (V) angewendet werden. Das Fahrzeug (V) kann hierbei ein Personenkraftwagen, jedoch auch jedes weitere Fahrzeug (V) sein, von welchem die Position innerhalb eines Bezugssystems mittels Lokalisierung bestimmt werden soll. Dem Fahrzeug (V) können fahrzeuginterne Sensoren (10) inne sein, vorzugsweise Sensoren, durch welche das unmittelbare Umfeld des Fahrzeuges (V) erfasst werden kann. Fahrzeuginterne Sensoren (10) können hierbei akustische Sensoren (11), wie RADAR-, Ultraschall- und weitere und/oder optische Sensoren (12), wie LiDAR-Sensoren (13), Kameras und/oder weitere Sensoren sein. Alternativ können fahrzeuginterne Sensoren (10) jede weitere technische Mittel umfassen, die eingerichtet sind, um Objekte des unmittelbaren Umfeldes des Fahrzeuges (V) zu lokalisieren und/oder den Abstand des Fahrzeuges (V) zu genannten Objekten zu ermitteln. Generell betrifft die Lokalisierung von Objekten das Ermitteln der Position entsprechender Objekte in Bezug zum Fahrzeug (V) selbst oder zur Einordnung der Position innerhalb eines Bezugssystems. Sämtliche dem Fahrzeug (V) zugehörige Sensoren werden nachfolgend unter dem Sammelbegriff der fahrzeuginternen Sensorik zusammengefasst, umfassen jedoch mindestens einen Sensor, der vorzugsweise ein LiDAR-Sensor (13) ist.

Dem Fahrzeug (V) können weiterhin technische Mittel zur externen Datenübertragung (20) inne sein. Die externe Datenübertragung (20) im Sinne der Erfindung umfasst das Senden und Empfangen von Daten als eine drahtlose Kommunikation mit externen Einrichtungen, wie beispielsweise Netzwerken, Satelliten oder weiteren Einrichtungen, die eingerichtet sind, um Daten von einem Fahrzeug (V) zu empfangen oder diese zu verteilen. In einer Ausführungsform umfassen technische Mittel der externen Datenübertragung (20) Ausführungsformen von globalen Navigationssatellitensystemen, vorzugsweise GPS (21). Dem Fahrzeug (V) können weitere technische Mittel zur drahtlosen Datenübertragung (22) inne sein, wie beispielsweise Bluetooth, WLAN, mobile Datenübertragung, Funk, UMTS und weitere.

Dem Fahrzeug (V) kann weiterhin ein fahrzeuginternes Steuergerät (30) inne sein, das ein Lokalisierungsmodul (31) und ein Validierungsmodul (32) umfasst, wobei das Lokalisierungsmodul (31) eingerichtet ist, um die Lokalisierung des Fahrzeuges (V) auszuführen und wobei das Validierungsmodul (31) eingerichtet ist, um Lokalisierungen des Fahrzeuges (V) auf ihre Genauigkeit hin zu überprüfen. Das Lokalisierungsmodul (31) und das Validierungsmodul (32) können softwaretechnisch als ein Teil der Software des fahrzeuginternen Steuergerätes (30) implementiert sein und ausführbaren Computerprogrammen entsprechen. In einer Ausführungsform kann das Lokalisierungsmodul (31) mehrere unabhängige Lokalisierungssysteme umfassen. Ein Lokalisierungssystem im Sinne der Erfindung ist die Kombination aus Software oder Computerprogrammen des Lokalisierungsmoduls (31), welchen Informationen zugeführt werden und die daraus die Lokalisierung des Fahrzeuges (V) ermitteln und den technischen Mitteln zur Bereitstellung entsprechender Informationen, wobei die technischen Mittel die fahrzeuginterne Sensorik (10) und/oder Elemente der externen Datenübertragung (20) umfassen können. In einer Ausführungsform umfasst das Lokalisierungsmodul (31) ein Lokalisierungssystem, welches die Lokalisierung des Fahrzeuges (V) mittels GPS (21) ermittelt und das Ergebnis der Lokalisierung an das Validierungsmodul (32) überträgt.

Dem Fahrzeug (V) kann weiterhin ein Datenspeicher (40) inne sein, der eingerichtet ist, um eine Vielzahl an Daten zu speichern. Generell können die fahrzeuginternen Sensoren sowie die externe Datenübertragung (20) eingerichtet sein, um Daten an den Datenspeicher (40) zu übertragen. Weiterhin kann das fahrzeuginterne Steuergerät (30) eingerichtet sein, um Daten von den fahrzeuginternen Sensoren (10) und der externen Datenübertragung (20) zu empfangen sowie Daten an den Datenspeicher (40) zu übertragen und/oder aus diesem zu lesen. In einer alternativen Ausführungsform umfasst das Lokalisierungsmodul (31) zwei unabhängige Lokalisierungssysteme, wobei ein erstes die Lokalisierung per GPS ermittelt und ein weiteres mittels optischer Sensoren (12), in der Ausgestaltung von Kameras. Das Lokalisierungsmodul (31) ist hierbei eingerichtet, um die Ergebnisse beider Lokalisierungssysteme an das Validierungsmodul (32) zu übertragen. Alternativ kann das Lokalisierungsmodul (31) eine beliebige Anzahl von Lokalisierungssystemen umfassen, deren Ergebnisse an das Validierungsmodul (32) übertragen werden. Das Validierungsmodul (32) ist entsprechend eingerichtet, um die Ergebnisse des Lokalisierungsmoduls (31) und/oder von der fahrzeuginternen Sensorik (10), wenigstens aber von einem LiDAR-Sensor zu empfangen.

Bezugnehmend auf Fig. 2 beginnt der Prozessablauf des erfindungsgemäßen Verfahrens mit dem Empfangen von wenigstens einer ermittelten Ego-Position, von wenigstens einem Lokalisierungssystem durch das Validierungsmodul (31), in einem ersten Schritt (S1). Die Ego-Position im Sinne der Erfindung ist die Position des Fahrzeuges (V) innerhalb eines Bezugssystems. Das Bezugssystem kann hierbei Teil eines Lokalisierungssystems und entsprechend mit diesem gekoppelt sein. In einer Ausführungsform, wobei das Lokalisierungssystem die Lokalisierung des Fahrzeuges (V) mittels GPS ermittelt, kann das Bezugssystem ein globales Koordinatensystem sein, zu dessen Ursprung das Fahrzeug (V) mittels Koordinaten seiner Position referenziert ist. In einer Ausführungsform, wobei das Fahrzeug (V) ein Personenkraftwagen ist, entspricht der Ursprung der Koordinaten der Position des Fahrzeuges (V) dem Mittelpunkt der Längsausdehnung der Hinterachse. Alternativ kann jeder weitere Bezugspunkt als Ursprung der Koordinaten der Position des Fahrzeuges (V) gewählt werden. Das globale Bezugssystem kann weiterhin als eine digitale Karte ausgebildet und Teil eines Navigationssystems sein. Innerhalb der digitalen Karte können weitere Objekte und Bezugspunkte angeordnet sein.

In einer alternativen Ausführungsform, wobei das Lokalisierungssystem die Lokalisierung des Fahrzeuges (V) mittels fahrzeuginterner, vorzugsweise optischer Sensoren (12) ermittelt, kann das Bezugssystem eine digitale Karte vom unmittelbaren Umfeld des Fahrzeuges (V) sein, wobei das Lokalisierungsmodul (31) eingerichtet ist, um Daten der vorzugsweise optischen Sensoren (12) zu verarbeiten, um beispielsweise per SLAM-Algorithmus die unmittelbare Umgebung des Fahrzeuges (V) zu ermitteln und innerhalb der digitalen Karte darzustellen. Das unmittelbare Umfeld des Fahrzeuges (V) ist abhängig vom angewendeten Lokalisierungssystem, wobei sich die Reichweite des unmittelbaren Umfeldes des Fahrzeuges (V) bis auf die Reichweite der entsprechend eingesetzten technischen Mittel zur Umsetzung der Lokalisierung ausdehnen kann. So kann beispielsweise das unmittelbare Umfeld des Fahrzeuges (V) einen Umkreis von 100m abdecken, in einer Ausführungsform, in der zur Lokalisierung LiDAR-Sensoren als optische Sensoren (12) angewendet werden, wenn hierbei Objekte in einer Entfernung zum Fahrzeug (V) von 100m mit einer geforderten Genauigkeit erfasst werden können. Im Umkehrschluss kann eine Lokalisierung mittels GPS den gesamten Globus als Bezugssystem nutzen, wobei hier die unmittelbare Nähe des Fahrzeuges (V) schwieriger darzustellen ist. Entsprechend kann es von Vorteil sein, mehrere unabhängige Lokalisierungssysteme parallel zu verwenden. Unabhängige Lokalisierungssysteme im Sinne der Erfindung sind jene, die unterschiedliche technische Mittel zur Ermittlung der notwendigen Daten und/oder unterschiedliche Methoden zur Verarbeitung genannter Daten innerhalb des Lokalisierungsmoduls (31) verwenden. Somit ist beispielsweise ein Lokalisierungssystem, welches GPS und ein globales Bezugssystem verwendet, unabhängig von einem weiteren Lokalisierungssystem, welches beispielsweise optische Sensoren und ein Bezugssystem im unmittelbaren Umfeld des Fahrzeuges (V) verwendet. Ebenfalls sind jedoch beispielsweise zwei Lokalisierungssysteme unabhängig voneinander, die beide den gleichen Typ von fahrzeuginternen Sensoren (12) und die gleiche Methode zur Lokalisierung verwenden, wobei jedoch jedem Lokalisierungssystem ein separater Sensor zugeordnet ist, der vom jeweils weiteren Sensor getrennt arbeitet und die Verwertung der Daten innerhalb des Lokalisierungsmoduls (31) in zwei unterschiedlichen Computerprogrammen oder Auswerteeinrichtungen erfolgt. Somit sind entstehende Fehler der Lokalisierungssysteme von anderen Fehlern weiterer Lokalisierungssysteme entkoppelt.

In einem zweiten Schritt erfolgt die Erfassung des Umfeldes (S2) des Fahrzeuges (V) mittels fahrzeuginterner Sensorik (10). Die Erfassung des Umfeldes des Fahrzeuges (V) umfasst das Erkennen und Lokalisieren von statischen und dynamischen Objekten im unmittelbaren Umfeld des Fahrzeuges (V), vorzugsweise mittels optischer Sensoren (12), insbesondere vorzugsweise mittels LiDAR-Sensoren (13). In einer Ausführungsform werden statische Objekte dadurch erkannt, dass sich deren durch die fahrzeuginterne Sensorik (10) ermittelte absolute Position innerhalb eines Bezugssystems zum Fahrzeug (V) zeit- und ortsbezogen nicht ändert. Zeitbezogen im Sinne der Erfindung bedeutet, dass sich die durch die fahrzeuginterne Sensorik (10) ermittelte absolute Position eines statischen Objekts zu einem ersten Zeitpunkt gegenüber einem zweiten Zeitpunkt, welcher in einem zeitlichen Abstand zu dem ersten Zeitpunkt folgt, nicht verändert. Entsprechend ist es dazu erforderlich, dass die Lokalisierung des Fahrzeuges (V) und somit der Schritt des Empfangens der Ego-Position durch ein ggf. unbekanntes Lokalisierungssystem (S1) ebenfalls zum zweiten Zeitpunkt erfolgt. Ortsbezogen im Sinne der Erfindung bedeutet hingegen, dass bei dem sich bewegenden Fahrzeug (V) die durch die fahrzeuginterne Sensorik (10) ermittelte absolute Position eines statischen Objekts zu einem ersten Lagepunkt gegenüber einem zweiten Lagepunkt, welcher in einem geographischen Abstand zu dem ersten Lagepunkt liegt, nicht verändert.

In einer Ausführungsform werden dynamische Objekte analog zu den statischen Objekten erkannt, mit dem Unterschied, dass sich die durch die fahrzeuginterne Sensorik (10) ermittelte absolute Position von dynamischen Objekten zeit- und ortsbezogen verändert. In einer Ausführungsform ist die erforderliche Änderung der absoluten Position von dynamischen Objekten mindestens größer als die gesamte Messunsicherheit der Positionsbestimmung von statischen Objekten. In einer vorteilhaften Ausführungsform werden die Schritte des Empfangens der Ego-Position des Fahrzeuges (V) durch ein unbekanntes Lokalisierungssystem (S1) und der Erfassung des Umfeldes (S2) kontinuierlich und parallel ausgeführt.

In einem weiteren Schritt des erfindungsgemäßen Verfahrens erfolgt das Vermessen statischer Landmarken (S3) mittels fahrzeuginterner Sensorik (10). Statische Landmarken im Sinne der Erfindung können statische Objekte sein, welche in einer typischen Anwendung für das entsprechende Fahrzeug (V) wiederkehrend angeordnet sind und/oder eine definierte Formgestalt aufweisen, sodass diese mit einer reproduzierbaren Genauigkeit durch die fahrzeuginterne Sensorik (10) erkannt werden können. In einer Ausführungsform, in der das Fahrzeug (V) ein Personenkraftwagen ist, können wiederkehrende statische Objekte, die eine im Wesentlichen definierte Formgestalt aufweisen, beispielsweise Elemente der Straßenführung wie Verkehrszeichen, Ampeln, Fahrbahnbegrenzungen oder weitere sein. Alternativ können jegliche weitere statische Objekte als Landmarken dienen, insofern diese durch die fahrzeuginterne Sensorik (10) mit einer erforderlichen Genauigkeit erfasst und vermessen werden können. In einer alternativen Ausführungsform sind statische Landmarken bereits innerhalb eines fahrzeuginternen Bezugssystems angeordnet, sodass diese vorbestimmt und wiederkehrend durch das Validierungsmodul (32) verwendet werden können. In einer vorteilhaften Ausführungsform werden statische Landmarken temporär und ohne Bezug zu einem Bezugssystem erfasst und vermessen. Hierbei werden durch die fahrzeuginterne Sensorik (10) oder mindestens einen LiDAR-Sensor (13) statische Objekte erfasst, deren äußere Formgestalt wenigstens dafür geeignet ist, eine erfindungsgemäße Vermessung durchzuführen. Die Vermessung von statischen Landmarken im Sinne der Erfindung ist die Ermittlung eines temporären und ortsfesten Bezugspunktes eines statischen Objektes, welchen die fahrzeuginterne Sensorik (10) zu einem späteren Zeitpunkt und/oder von einer veränderten Position des Fahrzeuges (V) aus reproduzierbar und mit einer geforderten Genauigkeit bestimmen kann und die Ermittlung des relativen Abstandes des statischen Objektes zum Fahrzeug (V) und/oder die absolute Position des Bezugspunktes jenes statischen Objektes.

In einem weiteren Schritt erfolgt erfindungsgemäß vorteilhaft die Verknüpfung der durch die fahrzeuginterne Sensorik (10) ermittelten Position von wenigstens einem Bezugspunkt einer statischen Landmarke, relativ zum Fahrzeug (V), mit der durch das wenigstens eine unbekannte Lokalisierungssystem erzeugten Ego-Position des Fahrzeuges (V) absolut innerhalb des zugehörigen Bezugssystems (S4). Das genannte unbekannte Lokalisierungssystem kann ein eigenes zugehöriges Bezugssystem umfassen. Die ermittelte Ego-Position des Fahrzeuges (V) wird entsprechend innerhalb des Validierungsmoduls (32) in das Bezugssystem eingepflegt und mit diesem gekoppelt. Beispielsweise ist in einer Ausführungsform, wobei das unbekannte Lokalisierungssystem die Ego-Position des Fahrzeuges (V) mittels GPS ermittelt, das Bezugssystem eine digitale Karte des gesamten Globus mit einem internen Koordinatensystem, wobei die Ego-Position des Fahrzeuges (V) als eine Transformation zum Ursprung jenes internen Koordinatensystems dargestellt werden kann. In jenem Bezugssystem kann zusätzlich die durch das erfindungsgemäße Verfahren vermessene statische Landmarke enthalten sein. Anstelle der bereits hinterlegten Position der statischen Landmarke innerhalb des unbekannten Lokalisierungssystems wird die ermittelte relative Position des Bezugspunktes der statischen Landmarke, die durch die fahrzeuginterne Sensorik (10) ermittelt wurde, verwendet. Es erfolgen demnach weitere Transformationen bezüglich des Bezugssystems des unbekannten Lokalisierungssystems, ausgehend von der absoluten Position des Fahrzeuges (V) zu dem wenigstens einen fahrzeuginternen Sensor (10) und zu der wenigstens einen statischen Landmarke. Somit wird in vorteilhafter Art und Weise die Lokalisierung der wenigstens einen statischen Landmarke von dem unbekannten Lokalisierungssystem entkoppelt, wodurch die Fehler der unbekannten Lokalisierung entfallen und durch die bekannten Fehler der fahrzeuginternen Sensorik (10), wie Kalibrierung und systematische Fehler, sowie eine Zeitverschiebung zwischen den Systemen ersetzt werden.

Im fünften Schritt des Prozessablaufes des erfindungsgemäßen Verfahrens erfolgt eine Abfrage, ob genügend Daten vorhanden sind (S5). Sind genügend Daten vorhanden, springt der Prozessablauf weiter zu Schritt S6, andernfalls springt der Prozessablauf wieder zu Schritt S1. Erfindungsgemäß wird beim Ausführen der Schritte S1 bis S4 zu einem ersten Zeitpunkt ein Datensatz erzeugt, bestehend aus einer durch das unbekannte Lokalisierungssystem ermittelten Ego-Position des Fahrzeuges (V), absolut bezogen auf das zugehörige Bezugssystem sowie einer durch die fahrzeuginterne Sensorik (10) ermittelten Position eines Bezugspunktes von wenigstens einer statischen Landmarke, relativ bezogen auf das Fahrzeug (V). Erfindungsgemäß vorteilhaft soll jedoch die Änderung der Position eines Bezugspunktes von der wenigstens einen Landmarke als Maß für die scheinbare Beweglichkeit der ortsfesten Umgebung ermittelt werden, wodurch mindestens ein zweiter Datensatz zu einem zweiten Zeitpunkt erforderlich ist. Je nach Auslegung des Schrittes S5 können demnach mehrere entsprechende Datensätze zu verschiedenen Zeitpunkten erhoben werden. Vorzugsweise werden die verschiedenen Datensätze während der Bewegung des Fahrzeuges (V) oder wenigstens an verschiedenen Positionen des Fahrzeuges (V) erzeugt.

In einem weiteren Schritt erfolgt die Berechnung der Änderung der Position der wenigstens einen statischen Landmarke (S6). Hierbei werden die in Schritt S3 aus den unterschiedlichen Datensätzen ermittelten Positionen der Bezugspunkte der wenigstens einen statischen Landmarke, welche in Schritt S4 in das Bezugssystem des unbekannten Lokalisierungssystems als absolute Positionskoordinaten integriert wurden, miteinander verglichen und entsprechende Abweichungen bestimmt. In einer vorteilhaften Ausführungsform werden die Abweichungen in der Position der wenigstens einen statischen Landmarke auf der Grundlage mehrerer Bezugspunkte in Abhängigkeit der Formgestalt der Landmarke bestimmt. So können beispielsweise in Schritt S2 und S3 markante geometrische Flächen und Formen einer Landmarke durch die fahrzeuginterne Sensorik (10) vermessen und in relativen Bezug zur Position des Fahrzeuges (V) gestellt werden, wobei die entsprechenden Flächen und Formen mit jenen aus einem weiteren Datensatz, von einem späteren Zeitpunkt und/oder einer veränderten Position des Fahrzeuges (V) verglichen werden, um festzustellen, ob sich die äußere Formgestalt der Landmarke unverhältnismäßig verändert hat. In einer beispielhaften Ausführungsform wurde in Schritt S2 ein im Wesentlichen rechteckig flächiges Verkehrsschild durch die fahrzeuginterne Sensorik (10) erfasst und in Schritt S3 wurden dessen Eckpunkte als Bezugspunkte vermessen. Entsprechend der Anordnung und Ausrichtung des wenigstens einen Sensors der fahrzeuginternen Sensorik (10), relativ zur Ego-Position des Fahrzeuges (V) und relativ zur Position und Ausrichtung des Verkehrsschildes, ergibt sich ein skalierbares Abstandsverhältnis der Bezugspunkte des Verkehrsschildes untereinander. Weiterhin entsprechend zu einem zweiten Zeitpunkt und/oder an einer weiteren Position des Fahrzeuges (V), oder mit anderen Worten aus einem weiteren Datensatz stammend, ergibt sich ein weiteres relatives Verhältnis der Bezugspunkte zueinander und zum Fahrzeug (V). Entsteht hierbei entsprechend der Bewegung des Fahrzeuges (V) eine unverhältnismäßige Skalierung der Bezugspunkte, ist erfindungsgemäß vorteilhaft ein erhöhter Fehler in der Positionsbestimmung und somit in der Lokalisierung der Ego-Position des Fahrzeuges (V) durch das unbekannte Lokalisierungssystem nachweisbar.

In einer alternativen vorteilhaften Ausführungsform werden in Schritt S2 und S3 wenigstens zwei unterschiedliche statische Objekte als Landmarken erfasst und vermessen, wobei je ein Bezugspunkt von einer ersten und einer zweiten Landmarke vermessen, sowie deren absolute Position, bezugnehmend auf Schritt S4, in das Bezugssystem des unbekannten Lokalisierungssystems integriert werden. Als Maß für die Beweglichkeit des statischen Umfeldes des Fahrzeuges (V) wird nunmehr der Abstand der Bezugspunkte der wenigstens zwei statischen Landmarken zueinander bestimmt. Unter Hinzunahme weiterer Datensätze ist erfindungsgemäß vorteilhaft die Änderung des Abstandes der Bezugspunkte der wenigstens zwei statischen Landmarken als ein Maß für die Beweglichkeit des statischen Umfeldes und somit als ein Maß für den Gesamtfehler der Lokalisierung der Ego-Position des Fahrzeuges (V) durch das unbekannte Lokalisierungssystem bestimmbar.

Alternativ kann jede weitere Methode Anwendung finden, die eingerichtet ist, um aus der Erfassung von statischen Objekten mittels fahrzeuginterner Sensorik (10) eine Änderung der ortsfesten Position jener statischen Objekte in Bezug auf ein Bezugssystem eines unbekannten Lokalisierungssystems zu bestimmen. Alternativ vorteilhaft können mehrere der genannten Methoden in Kombination angewendet werden. In einer vorteilhaften Ausführungsform werden wenigstens zwei statische Landmarken erfasst und vermessen, wobei die Beweglichkeit des ortsfesten Umfeldes des Fahrzeuges (V) sowohl durch die Bestimmung der Änderung der Formgestalt der einzelnen statischen Landmarken selbst, als auch durch deren Abstand zueinander selbst ermittelt wird.

Um die genannte Unverhältnismäßigkeit der ermittelten Änderungen der Position der wenigstens einen statischen Landmarke bewerten zu können, wird zunächst in einem weiteren Schritt der Gesamtfehler der Bestimmung der Position der wenigstens einen Landmarke berechnet (S7). In einer Ausführungsform werden hierbei wenigstens zwei Datensätze, umfassend zeitlich oder ortsveränderte Daten bezüglich der Lokalisierung der Ego-Position durch das unbekannte Lokalisierungssystem und der vermessenen wenigstens einen statischen Landmarke angewendet. Mit steigender Anzahl an Datensätzen bezüglich derselben statischen Landmarken erhöht sich ebenfalls die Genauigkeit der Berechnung des Fehlers der Positionsbestimmung.

In einem weiteren Schritt erfolgt letztendlich die Bewertung der nach Schritt S7 ermittelten Gesamtfehler der Positionsbestimmung (S8). Die aus den unterschiedlichen Datensätzen hervorgehenden Positionen der Bezugspunkte der statischen Landmarken unterliegen einer Messungenauigkeit, welche auf das erfindungsgemäße Verfahren zurückzuführen ist. Die relativ zum Fahrzeug (V) erfassten Landmarken unterliegen in ihrer Positionsbestimmung einer bestimmbaren Abweichung, lediglich bestehend aus der bekannten Messunsicherheit und der Kalibrierung der angewendeten fahrzeuginternen Sensorik (10) sowie ggf. systematischen Fehlern. Die absolute Positionsbestimmung jener Landmarken, integriert in das Bezugssystem der unbekannten Lokalisierung, unterliegt zusätzlich der zeitlichen Verschiebung der Schritte S1, S2 und S3, also der Lokalisierung der Ego-Position des Fahrzeuges (V) und der Erfassung und Vermessung des statischen Umfeldes, sowie dem Fehler der Lokalisierung der Ego-Position des Fahrzeuges (V) durch das unbekannte Lokalisierungssystem. Entsprechend sind die Fehler aus Messunsicherheit und Kalibrierung der fahrzeuginternen Sensorik (10) bekannt, ist die zeitliche Verschiebung der beiden Systeme bestimmbar sowie sind systematische Fehler abschätzbar. Auf diese erfindungsgemäß vorteilhafte Art und Weise entsteht die einzige unbestimmbare Messunsicherheit aus dem Fehler der Lokalisierung des unbekannten Lokalisierungssystems. Erfindungsgemäß vorteilhaft können nunmehr in Abhängigkeit von definierten Anforderungen tolerierbare Fehlergrenzen in der Bestimmung der Position der wenigstens einen statischen Landmarke aufgestellt werden, wobei Abweichungen jener Position, welche über die nach solcherart definierte Fehlerschwelle hinausgehen, als ein Maß für den Fehler des zu validierenden unbekannten Lokalisierungssystems nachweisbar sind.

Anforderungen an tolerierbare Fehlergrenzen, bezogen auf das interne Bezugssystem des unbekannten Lokalisierungssystems, können geographischer, populationstechnischer, sicherheitstechnischer, klimatischer und weiterer Anforderungen bedingt sein. So kann beispielsweise eine tolerierbare Gesamtfehlergrenze in geographischer Abhängigkeit an Orten, in denen viele Menschen oder weitere Hindernisse existieren und gleichzeitig eine Vielzahl an Landmarken zur möglichen Orientierung eines Fahrzeuges (V) vorhanden sind, geringer sein, um Kollisionen zu verhindern oder das Fahrzeug (V) anwendungsgerecht zu steuern, als an Orten, in denen verhältnismäßig viel Freifläche und wenige Landmarken vorhanden sind, sodass hier die Lokalisierung des Fahrzeuges (V) verhältnismäßig ungenauer erfolgen kann. Das erfindungsgemäße Verfahren schafft somit in vorteilhafter Art und Weise die Möglichkeit, ein unbekanntes Lokalisierungssystem an jeder beliebigen globalen Position des Fahrzeuges (V) unabhängig von weiteren Referenzsystemen bezüglich seiner Genauigkeit zu bewerten und gleichzeitig bietet es im Umkehrschluss die Möglichkeit, bei der Validierung entsprechender Lokalisierungssysteme auf Streckenabschnitte hinzuweisen, in denen die Genauigkeit des zu validierenden Lokalisierungssystems angepasst werden muss.

Abschließend ist anzumerken, dass mit der Bezeichnung des unbekannten Lokalisierungssystems mitnichten ausschließlich vollständig unbekannte Systeme gemeint sind. Ein unbekanntes Lokalisierungssystem kann ebenso bekannte Methoden, Verfahren und Vorrichtungen anwenden und/oder bekannte Bezugssysteme verwenden, wobei lediglich die Genauigkeit der Lokalisierung der Ego-Position eines Fahrzeuges (V) in Summe und somit als Gesamtfehler unbekannt ist. Entsprechend kann das erfindungsgemäße Verfahren für jegliche Lokalisierungssysteme angewendet werden, deren Genauigkeit überprüft, validiert oder reproduziert werden soll.

**Ausführungsbeispiele**

Nachfolgend werden Ausführungsbeispiele der beschriebenen Ausführungsformen aufgezeigt. Weitere Besonderheiten und Vorteile ergeben sich zusätzlich aus den unterstützenden Schaubildern, hierbei zeigen:

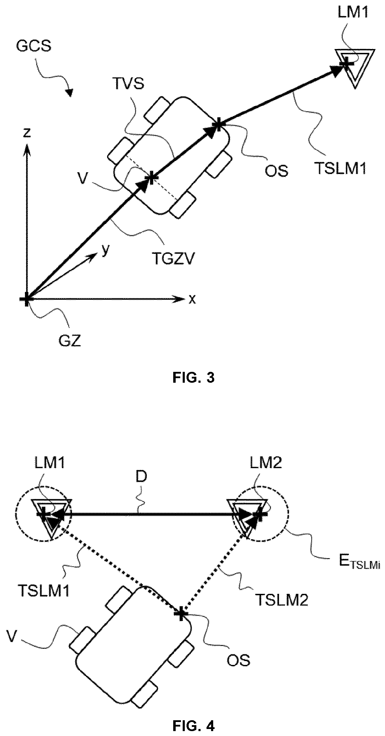

Fig. 3    das globale Bezugssystem einer unbekannten Lokalisierung,
Fig. 4    eine Ausführungsform zur Bestimmung des Abstandes zwischen zwei statischen Landmarken,

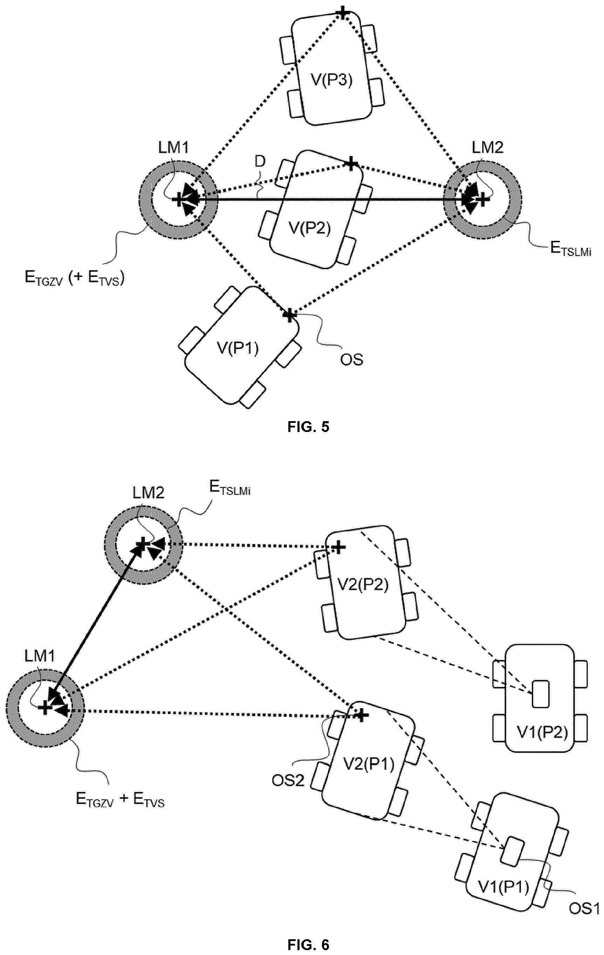

Fig. 5    eine Ausführungsform zur Ermittlung des Gesamtfehlers mittels Abstandsbestimmung,
Fig. 6    eine Ausführungsform zur Validierung der Lokalisierung mittels Fahrzeugflotten.

Bezugnehmend auf Fig. 3 soll das Zusammenwirken des Lokalisierungsmoduls (31) und des Validierungsmoduls (32) nachfolgend näher erläutert werden. In einer Ausführungsform, in welcher die Lokalisierung des Fahrzeuges (V) mittels GPS durch ein unbekanntes Lokalisierungssystem erfolgt, wird die durch jenes unbekannte Lokalisierungssystem ermittelte Position des Fahrzeuges (V) durch die Koordinaten eines Bezugspunktes angegeben, welcher sich hierbei in beispielhafter Art und Weise in der Mitte der Hinterachse des Fahrzeuges (V), dargestellt durch das Kreuz auf der gestrichelten Linie, befindet. Das Ergebnis der Lokalisierung entspricht demnach den Informationen bezüglich eines Bezugssystems sowie den Koordinaten des Bezugspunktes des Fahrzeuges (V). Diese Informationen werden durch das Lokalisierungsmodul (31) erfasst und an das Validierungsmodul (32) weitergeleitet. In einer Ausführungsform interpretiert das Validierungsmodul (32) diese Informationen in der Art, dass die nach solcherart ermittelte Position des Fahrzeuges (V) in ein dem unbekannten Lokalisierungssystem zugehöriges globales Koordinatensystem (GCS) als Bezugssystem eingeordnet und bezüglich eines globalen Nullpunktes (GZ) als Koordinatenursprung referenziert ist. Entsprechend erfolgt eine mathematische Transformation (TGZV) vom globalen Nullpunkt (GZ) zum Bezugspunkt des Fahrzeuges (V), dargestellt durch einen fetten Pfeil, beginnend im globalen Nullpunkt (GZ) und endend an der schematisch dargestellten Hinterachse des Fahrzeuges (V). Innerhalb des erfindungsgemäßen Verfahrens wird nunmehr durch das Validierungsmodul (31) der Prozessablauf nach Fig. 2 fortgeführt, wobei das statische Umfeld des Fahrzeuges (V) mittels fahrzeuginterner Sensorik (10), vorzugsweise mit einem LiDAR-Sensor (12) als optischen Sensor (OS), erfasst wird. Hierbei erkennt der optische Sensor (OS) beispielsweise eine erste statische Landmarke (LM1). Das Validierungsmodul (31) referenziert nunmehr den Bezugspunkt des Fahrzeuges (V) zu einem erfassten Bezugspunkt der ersten statischen Landmarke (LM1), wobei hier die mathematischen Transformationen TVS, vom Bezugspunkt des Fahrzeuges (V) zur Position des optischen Sensors (OS), innerhalb des Fahrzeuges (V) sowie TSLM1, vom optischen Sensor (OS) zur ersten statischen Landmarke (LM1) ausgeführt werden.

Würde die erste statische Landmarke (LM1) unmittelbar in das unbekannte Lokalisierungssystem integriert sein, wenn beispielsweise die Umfelderkennung Teil der Lokalisierung des unbekannten Lokalisierungssystems wäre, dann würde die erste statische Landmarke (LM1) entsprechend einer Transformation TGZLM1, wie nachfolgend dargestellt, aus einer Serie von einzelnen Transformationen (TGZV, TVS, TSLM1) bestehen.

$$T_{GZ,LM1} = T_{GZ,V} \cdot T_{V,S} \cdot T_{S,LM1} \qquad \text{(Gl. 1)}$$

Jede dieser Transformationen (TGZV, TVS, TSLM1) enthält unterschiedliche Fehlerquellen, welche zu jedem Zeitpunkt der Messung mit einer bestimmbaren Messgenauigkeit ausgedrückt werden können. Bezugnehmend auf Fig. 4, wobei in einer Ausführungsform, in welcher die Beweglichkeit der statischen Umgebung mittels Überprüfung der Änderung des Abstandes zweier Landmarken (LM1, LM2) erfolgt, die Landmarken (LM1, LM2) zum einen als absolute Koordinaten innerhalb des globalen Koordinatensystems (GCS) des unbekannten Lokalisierungssystems gegeben sein können und zum anderen als zweidimensionale Koordinaten oder in Form eines Abstandes und eines Winkels, relativ zum Fahrzeug (V) durch den wenigstens einen optischen Sensor (OS) gemessen werden können. Bezogen auf das globale Koordinatensystem (GCS) ist die statische Umgebung des Fahrzeuges (V) und somit die Position und somit auch der Abstand zwischen zwei Landmarken (LM1, LM2) nicht veränderbar, unabhängig von der Bewegung des Fahrzeuges (V). Sollte sich der Abstand (D) beider Landmarken (LM1, LM2) im Rahmen des erfindungsgemäßen Verfahrens dennoch verändern, so ist dies ein Maß für einen Fehler $E_{TSLMi}$ (i = 1,2) in der Messgröße der Transformationen TSLM1 und TSLM2 zwischen dem Fahrzeug (V) und den beiden Landmarken (LM1, LM2). Der Fehler $E_{TSLMi}$ kann abhängig vom aktuellen Beobachtungsort des Fahrzeuges (V), von der äußeren Formgestalt der Landmarke sowie vom Messfehler des wenigstens einen optischen Sensors (OS) sein. Unabhängig von den exakten Fehlerbedingungen, entspricht $E_{TSLMi}$ jedoch einem Gesamtfehler für die Transformation TSLMi. Der Gesamtfehler bezüglich der exakten Position der Landmarken (LM1, LM2) oder auch in analoger Weise für den Abstand (D) ist schematisch als gestrichelter Kreis um die beiden Landmarken (LM1, LM2) dargestellt. In einer alternativen Ausführungsform weist eine entsprechende Fehlerwolke für eine beliebige Landmarke (LM1) unterschiedliche Ausprägungen entsprechend der Dimensionen möglicher Fehlerquellen auf.

Bezugnehmend auf Gl. 1 ist die Messgenauigkeit der Transformation TSLM1 generell somit als ein Gesamtfehler $E_{TSLMi}$ darstellbar. Die Transformation TGZV entspricht der Lokalisierung des Fahrzeuges (V) durch das unbekannte Lokalisierungssystem und enthält somit einen unbekannten Fehler. Erfindungsgemäß wird durch das Validierungsmodul (32) nun angenommen, dass die Transformationen TGZLM1 und TVS konstant sind, da sich sowohl die Position einer beliebigen statischen Landmarke (LM1) bezüglich des statischen Koordinatenursprungs (GZ), als auch die Position des wenigstens einen optischen Sensors (OS) relativ zum Fahrzeug (V) nicht verändern. Erfindungsgemäß vorteilhaft kombiniert das Validierungsmodul (32), gemäß dem Schritt S4 des Prozessablaufes nach Fig. 2, die durch den wenigstens einen optischen Sensor (OS) ermittelte Position der statischen Landmarken (LM1, LM2), entsprechend der Transformationen TSLM1 und TSLM2 mit der durch das unbekannte Lokalisierungssystem ermittelten Position des Fahrzeuges (V), entsprechend der Transformation TGZV und berechnet eine sich daraus ergebende Position der Landmarken (LM1, LM2), entsprechend der Transformation TGZLMi (i = 1,2). Somit ergibt sich für die Transformation TGZLMi, welche der Ermittlung der Position der Landmarken (LM1, LM2) durch das Validierungsmodul (32) entspricht, zu:

$$T_{GZ,LMi,Validierung} = T_{GZ,V,unbekannt} \cdot T_{V,S,konstant} \cdot T_{S,LMi,Messung}; \; i = 1,2 \qquad \text{(Gl. 2)}$$

Wenn nun die Lokalisierung durch das unbekannte Lokalisierungssystem, entsprechend der Transformation TGZV_unbekannt erfindungsgemäß vorteilhaft als perfekt angenommen wird, ergibt sich dessen Fehler $E_{TGZV}$ zu 0. Somit würde für den Fehler der Positionsermittlung der Landmarken (LM1, LM2), $E_{TGZLMi}$ gelten:

$$E_{GZ,LMi} = E_{S,LMi} \qquad\qquad \text{(Gl. 3)}$$

In diesem Gesamtfehler der Ermittlung der Positionen der statischen Landmarken (LM1, LM2), $E_{TGZLMi}$ sind insbesondere die bestimmbaren Fehler bezüglich der Kalibrierung der optischen Sensoren (OS), des Zeitverhaltens zwischen dem unbekannten Lokalisierungssystem und der Messung der mittels optischer Sensoren (OS), dem Messfehler der optischen Sensoren (OS) selbst sowie systematischen Fehlern enthalten. Dieser Gesamtfehler der Ermittlung der Positionen der statischen Landmarken (LM1, LM2), $E_{TGZLMi}$ sollte somit, bei angenommener perfekter Lokalisierung des Fahrzeuges (V) durch das unbekannte Lokalisierungssystem dem bestimmbaren Messfehler $E_{TSLMi}$ entsprechen und/oder im Wesentlichen bekannt sein. Systematische Fehler, wie Verdeckungen, Spiegelungen, Missmatches auf fälschlicherweise als statische Landmarke erkannte Objekte und weitere können weiterhin auf einfache Art und Weise als "Ausreißer" in den Datensätzen ermittelt werden. Wird der Gesamtfehler der Ermittlung der Positionen der statischen Landmarken (LM1, LM2), $E_{TGZLMi}$ in unterschiedlichen Situationen oder an unterschiedlichen Landmarken (LMi) unverhältnismäßig größer als der bekannte Messfehler $E_{TSLMi}$, so ist die über diesen Messfehler hinausgehende Abweichung ein Maß für die Fehlergröße $E_{TGZV}$, der Transformation TGZV, vom Koordinatenursprung (GZ) des Bezugssystems zum Fahrzeug (V) oder mit anderen Worten der Lokalisierung des unbekannten Lokalisierungssystems.

In Fig. 5 ist eine Ausführungsform des erfindungsgemäßen Verfahrens dargestellt, wobei ein sich bewegendes Fahrzeug (V) zwei statische Landmarken (LM1, LM2) passiert und an 3 unterschiedlichen Positionen (P1, P2, P3) die Lokalisierung des Fahrzeuges (V) durch ein unbekanntes Lokalisierungssystem gemäß der vorangegangenen Beschreibung, mittels Abstandsmessung validiert. Erfindungsgemäß vorteilhaft sollte der ermittelte Abstand (D) zwischen den beiden statischen Landmarken (LM1, LM2) an allen 3 Positionen (P1, P2, P3) im Wesentlichen unverändert sein. Ein im Wesentlichen unveränderter Abstand (D) der beiden statischen Landmarken (LM1, LM2) im Sinne dieses Ausführungsbeispiels, kann zum einen durch einen Abstand (D) ausgedrückt werden, der in allen 3 Messungen eine maximale Fehlergrenze nicht übersteigt und/oder zum anderen jeweils innerhalb direkter Vergleiche von jeweils zwei Messungen nicht unverhältnismäßig hervorsticht. Weisen beispielsweise die beiden gemessenen Abstände (D) von den Positionen P1 und P2 aus im direkten Vergleich lediglich eine geringe Abweichung auf und weisen die Abstände (D) von der Position P3 jeweils zu den Positionen P1 und P2 im direkten Vergleich eine unverhältnismäßig höhere Abweichung auf, so ist dies ein Indiz dafür, dass die Lokalisierung des Fahrzeuges (V) durch das unbekannte Lokalisierungssystem an der Position P3 eine erhöhte Ungenauigkeit erzeugt. Auf diese vorteilhafte Art und Weise können durch das erfindungsgemäße Verfahren globale Positionen oder, in Bezug auf ein vorhandenes Bezugssystem (GCS), Koordinaten ausfindig gemacht werden, an denen die Lokalisierung durch das unbekannte Lokalisierungssystem verbessert werden sollte. Zur Visualisierung der Fehlergrößen sind jeweils um die statischen Landmarken (LM1, LM2) gestrichelte Kreise gezogen, welche für die mögliche Position der Lokalisierung jener Landmarken (LM1, LM2) stehen. Der jeweils innere Kreis bildet hierbei schematisch den bekannten Messfehler $E_{TSLMi}$ und der äußere Kreis den sich dazu ergebenden Fehler des unbekannten Lokalisierungssystems, welcher im Wesentlichen aus dem Fehler $E_{TGZV}$ der Transformation TGZV, zwischen dem Koordinatenursprung (GZ) und dem Fahrzeug (V), besteht und rechnerisch zusätzlich den Fehler $E_{TVS}$ der Transformation TVS, zwischen dem Bezugspunkt des Fahrzeuges (V) und der Position des wenigstens einen optischen Sensors (OS) innerhalb des Fahrzeuges, enthalten kann.

In Fig. 6 ist eine alternative Ausführungsform des erfindungsgemäßen Verfahrens dargestellt, wobei eine Lokalisierung eines Fahrzeuges (V) indirekt durch die Beobachtung des dynamischen Umfeldes, vorzugsweise von sich bewegenden Fahrzeugen (V1, V2), insbesondere innerhalb einer Fahrzeugflotte, erfolgt. Hierbei können in vorteilhafter Art und Weise Systeme validiert werden, die das dynamische Umfeld eines Fahrzeuges (V) beobachten. In der dargestellten Ausführungsform umfasst ein erstes Fahrzeug (V1) ein Lokalisierungssystem, wobei mittels fahrzeuginterner Sensorik (10) die Bewegung von dynamischen Objekten im Umfeld erfasst werden soll. So können die entsprechenden technischen Mittel der fahrzeuginternen Sensorik (10) des ersten Fahrzeuges (V1) eingerichtet sein, um das dynamische Umfeld des Fahrzeuges (V2) zu erfassen und auf diese Art und Weise beispielsweise Kollisionen zu vermeiden. Zu diesem Zweck ist es notwendig, dass das erste Fahrzeug (V1) das dynamische Umfeld ebenfalls möglichst genau lokalisieren kann. Um ein entsprechendes Lokalisierungssystem zu validieren, kann das erfindungsgemäße Verfahren angewendet werden.

In einer Ausführungsform umfasst das erste Fahrzeug (V1) wenigstens einen ersten fahrzeuginternen Sensor (OS1), als Teil von dessen fahrzeuginterner Sensorik (10), der eingerichtet ist, um die Position des dynamischen Umfeldes zu erkennen. Der wenigstens eine erste Sensor (OS1) kann eine Kamera sein, die eingerichtet ist, um sich bewegende Objekte innerhalb des Blickwinkels zu erfassen und diese Informationen weiter zu verarbeiten. Mittels des Sensors (OS1) erfasst das erste Fahrzeug (V1) die Bewegung eines zweiten Fahrzeuges (V2) und ermittelt über ein entsprechendes Lokalisierungssystem die Position des zweiten Fahrzeuges (V2). Die Position des zweiten Fahrzeuges (V2) kann hierbei sowohl relativ zum ersten Fahrzeug (V1) als auch absolut, innerhalb eines globalen Koordinatensystems (GCS) erfolgen, sofern die absolute Position des ersten Fahrzeuges (V1) ebenfalls bekannt ist. Wenn sich beide Fahrzeuge (V1, V2) bewegen, kann das erste Fahrzeug (V1) beispielsweise zu einem ersten Zeitpunkt das zweite Fahrzeug (V2) in einer ersten Position (P1) und zu einem zweiten Zeitpunkt in einer zweiten Position (P2) lokalisieren. Soll nun die Genauigkeit überprüft werden, mit welcher die Lokalisierung des zweiten Fahrzeuges (V2) durch das Lokalisierungssystem des ersten Fahrzeuges (V1) mittels der Kamera als einen ersten Sensor (OS1) durchgeführt wird, so ist es erforderlich, dass das zweite Fahrzeug (V2) ebenfalls wenigstens einen Sensor (OS2) als Teil einer fahrzeuginternen Sensorik (10) aufweist, um das erfindungsgemäße Verfahren durchzuführen. In einer Ausführungsform führt das zweite Fahrzeug (V2), unter Anwendung eines Sensors (OS2) das erfindungsgemäße Verfahren durch, in dem es beispielsweise die Änderung des Abstandes der beiden statischen Landmarken (LM1, LM2) bewertet. Anstelle der unbekannten Lokalisierung werden hier erfindungsgemäß vorteilhaft die Informationen von zwei Fahrzeugen kombiniert (V1, V2), wobei eine Lokalisierung durch das erste Fahrzeug (V1) vorgenommen wird und die Vermessung des statischen Umfeldes durch das zweite Fahrzeug (V2) erfolgt.

In vorteilhafter Art und Weise ergeben sich dadurch unterschiedliche Anwendungsszenarien. In einer ersten Anwendung kann die Position des ersten Fahrzeuges (V1) durch ein unbekanntes Lokalisierungssystem ermittelt werden. Die Validierung dieser Lokalisierung kann in einfacher Art und Weise, lediglich durch Anordnen eines weiteren Sensors (OS1), beispielsweise in Ausgestaltung einer Kamera, an dem ersten Fahrzeug (V1), verbessert werden, wobei ein zweites Fahrzeug (V2) mittels eines Sensors (OS2) das statische Umfeld des zweiten Fahrzeuges (V2) erfasst und diese Informationen an das erste Fahrzeug (V1) oder an ein extern gelagertes Validierungsmodul (32) übermittelt. Durch den bekannten Messfehler des Sensors (OS1) des ersten Fahrzeuges (V1) können die Informationen bezüglich der vom zweiten Fahrzeug (V2) erfassten Änderung des statischen Umfeldes mit in die Validierung einbezogen werden. In einer weiteren Anwendung kann im Umkehrschluss, bei bekannter und/oder validierter Lokalisierung des ersten und zweiten Fahrzeuges (V1, V2) ein Kamerasystem als optischer Sensor (OS1) des ersten Fahrzeuges überprüft werden, insofern, als dass validiert werden kann, in wie fern das Kamerasystem die exakte Position des beobachteten Fahrzeuges (V2) ermittelt. In einer weiteren Anwendung kann die Position des zweiten Fahrzeuges (V2) durch ein unbekanntes Lokalisierungssystem ermittelt werden. Die Validierung von diesem unbekannten Lokalisierungssystem kann hierbei ebenfalls durch eine Kombination der verfügbaren Informationen erfolgen, wobei die vom ersten Fahrzeug (V1) durch einen ersten Sensor (OS1) ermittelte Position des zweiten Fahrzeuges (V2) mit der Erfassung des statischen Umfeldes des zweiten Fahrzeuges (V2) durch einen zweiten Sensor (OS2) gekoppelt werden.

Zusammengefasst wird ein computerimplementiertes Verfahren zur Validierung der von wenigstens einem Lokalisierungssystem ermittelten Ego-Position eines Fahrzeuges (V) unter Referenzierung des unmittelbaren Umfeldes mittels fahrzeuginterner Sensorik (10) bereitgestellt, das dadurch gekennzeichnet ist, dass eine basierend auf der Kombination der durch das wenigstens eine Lokalisierungssystem erzeugten Ego-Position in einem ersten Schritt (S1) mit dem durch die fahrzeuginterne Sensorik (10) erfassten Umfeld in einem zweiten Schritt (S2) ermittelte Beweglichkeit von wenigstens einem statischen Objekt des Umfeldes als ein Maß für die Ungenauigkeit des Lokalisierungssystems bestimmbar ist, umfassend

- (S3) Erfassen der Änderung der Position und/oder Formgestalt von mindestens einer statischen Landmarke (LM), durch Vermessung der zum Fahrzeug (V) relativen Position von wenigstens einem Bezugspunkt jener mindestens einen statischen Landmarke (LM) mittels fahrzeuginterner Sensorik (10) von wenigstens zwei ortsunterschiedlichen Positionen (P1, P2) des Fahrzeuges (V) aus,
- (S4) Integrieren der zum Fahrzeug (V) relativen Positionen der von wenigstens zwei ortsunterschiedlichen Positionen (P1, P2) aus vermessenen Bezugspunkte als absolute Positionskoordinaten in das Bezugssystem des Lokalisierungssystems,
- (S6, S7) Berechnen der Abweichung der absoluten Positionskoordinaten der vermessenen Bezugspunkte als einen Gesamtfehler ($E_{TGZLMi}$) der Ungenauigkeit des Lokalisierungssystems,
- (S8) Bewerten des Gesamtfehlers ($E_{TGZLMi}$) in Bezug auf bestimmbare Fehlerquellen sowie Einflüsse aus dem unmittelbaren Umfeld des Fahrzeuges (V) durch Vergleich jenes Gesamtfehlers ($E_{TGZLMi}$) mit dem bekannten Messfehler ($E_{TSLMi}$) und dem Transformationsfehler ($E_{TVS}$) zwischen dem Fahrzeug (V) und der fahrzeuginternen Sensorik (10).

**Bezugszeichenliste**

| | |
|---|---|
| 10 | Fahrzeuginterne Sensoren |
| 11 | Akustische Sensoren |
| 12 | Optische Sensoren |

| 13 | LiDAR-Sensoren |
|---|---|
| 20 | Externe Datenübertragung |
| 21 | GPS |
| 22 | Drahtlose Datenübertragung |
| 30 | Fahrzeuginternes Steuergerät |
| 31 | Lokalisierungsmodul |
| 32 | Validierungsmodul |
| 40 | Datenspeicher |
| D | Abstand |
| E | Fehler |
| GCS | Globales Koordinatensystem |
| GZ | Globaler Nullpunkt |
| i | Index |
| LM, LM1, LM2 | Landmarke |
| OS, OS1, OS2 | Optischer Sensor |
| P1, P2, P3 | Position |
| S1 | Empfangen Ego-Position |
| S2 | Erfassen Umfeld |
| S3 | Vermessen statischer Landmarken |
| S4 | Verknüpfen statischer Landmarken und Ego-Position |
| S5 | Genügend Daten vorhanden? |
| S6 | Berechnen Änderung Position statischer Landmarken |
| S7 | Ermitteln Gesamtfehler |
| S8 | Bewerten Gesamtfehler |
| T | Transformation |
| TGZV | Transformation Bezugssystem zu Fahrzeug |
| TSLM | Transformation Sensor zu Landmarke |
| TVS | Transformation Fahrzeug zu Sensor |
| V, V1, V2 | Fahrzeug |

**Patentansprüche**

1. Computerimplementiertes Verfahren zur Validierung der von wenigstens einem Lokalisierungssystem ermittelten Ego-Position eines Fahrzeuges (V) unter Referenzierung des unmittelbaren Umfeldes mittels fahrzeuginterner Sensorik (10), **dadurch gekennzeichnet, dass** eine basierend auf der Kombination der durch das wenigstens eine Lokalisierungssystem erzeugten Ego-Position in einem ersten Schritt (S1) mit dem durch die fahrzeuginterne Sensorik (10) erfassten Umfeld in einem zweiten Schritt (S2) ermittelte Beweglichkeit von wenigstens einem statischen Objekt des Umfeldes als ein Maß für die Ungenauigkeit des Lokalisierungssystems bestimmbar ist.

2. Verfahren nach Anspruch 1, **dadurch gekennzeichnet, dass** das Ermitteln der Beweglichkeit von wenigstens einem statischen Objekt des Umfeldes das Erfassen der Änderung der Position und/oder der Formgestalt von mindestens einer statischen Landmarke (LM) umfasst.

3. Verfahren nach Anspruch 2, **dadurch gekennzeichnet, dass** das Erfassen der Änderung der Position und/oder der Formgestalt von mindestens einer statischen Landmarke (LM) die Vermessung der zum Fahrzeug (V) relativen Position von wenigstens einem Bezugspunkt jener mindestens einen statischen Landmarke (LM) mittels fahrzeuginterner Sensorik (10) von wenigstens zwei ortsunterschiedlichen Positionen (P1, P2) des Fahrzeuges (V) aus in einem dritten Schritt (S3) umfasst.

4. Verfahren nach Anspruch 3, **dadurch gekennzeichnet, dass** die Kombination der durch das wenigstens eine Lokalisierungssystem erzeugten Ego-Position mit dem durch die fahrzeuginterne Sensorik (10) erfassten Umfeld das Integrieren der Positionen von wenigstens je einem, von den wenigstens zwei ortsunterschiedlichen Positionen (P1, P2) des Fahrzeuges (V) aus vermessenen Bezugspunkten in das Bezugssystem des Lokalisierungssystems in zwei weiteren Schritten (S4, S6) umfasst.

5. Verfahren nach Anspruch 4, **dadurch gekennzeichnet, dass** das Maß für die Ungenauigkeit des Lokalisierungssystems als ein Gesamtfehler ($E_{TGZLMi}$) der aus der Integration der durch die fahrzeuginterne Sensorik (10) vermessenen Bezugspunkte erzeugten Position des wenigstens einen Bezugspunktes der wenigstens einen Landmarke (LM) in einem weiteren Schritt (S7) bestimmbar ist.

6. Verfahren nach Anspruch 5, **dadurch gekennzeichnet, dass** der Gesamtfehler ($E_{TGZLMi}$) aus einem Vergleich von wenigstens zwei vermessenen Positionen eines Bezugspunktes, die von wenigstens zwei ortsunterschiedlichen Positionen (P1, P2) des Fahrzeuges (V) aus erfasst wurden, als eine Abweichung bestimmbar ist.

7. Verfahren nach Anspruch 6, **dadurch gekennzeichnet, dass** die Bestimmung des Gesamtfehlers ($E_{TGZLMi}$) die Bewertung jenes Gesamtfehlers ($E_{TGZLMi}$) in Bezug auf bestimmbare Fehlerquellen sowie Einflüsse aus dem unmittelbaren Umfeld des Fahrzeuges (V) in einem weiteren Schritt (S8) umfasst.

8. Verfahren nach Anspruch 7, **dadurch gekennzeichnet, dass** bestimmbare Fehlerquellen die Fehler von mathematischen Transformationen innerhalb des Bezugssystems des Lokalisierungssystems, die Messunsicherheit und Kalibrierung der fahrzeuginternen Sensorik (10), das Zeitverhalten zwischen Lokalisierungssystem und fahrzeuginterner Sensorik (10) und systematische Fehler sowie, dass Einflüsse aus dem unmittelbaren Umfeld des Fahrzeuges (V) globale Positionen des Fahrzeuges (V) sind, an denen eine erhöhte Abweichung in der Bestimmung der Position von statischen Landmarken (LM) auftritt, umfassen.

9. Steuergerät (30), umfassend

• ein Lokalisierungsmodul (31), das eingerichtet ist, um die Ego-Position eines Fahrzeuges (V) zu ermitteln sowie
• ein Validierungsmodul (32), das eingerichtet ist, um die Ego-Position sowie Daten einer fahrzeuginternen Sensorik (10) zu empfangen und die Validierung der Lokalisierung der Ego-Position des Fahrzeuges (V) gemäß einem der Ansprüche 1 bis 8 auszuführen.

10. Fahrzeug (V), umfassend

• eine fahrzeuginterne Sensorik (10), die eingerichtet ist, um das unmittelbare Umfeld des Fahrzeuges (V) zu erfassen und/oder eine Lokalisierung der Ego-Position des Fahrzeuges (V) auszuführen,
• eine externe Datenübertragung (20), die eingerichtet ist um eine Lokalisierung der Ego-Position des Fahrzeuges (V) und/oder eine Kommunikation zu externen Einrichtungen auszuführen sowie
• ein Steuergerät (30) nach Anspruch 9, das eingerichtet ist, um die Validierung der Lokalisierung der Ego-Position des Fahrzeuges (V) gemäß einem der Ansprüche 1 bis 8 auszuführen.

V

**FIG. 1**

```
        START
          │
    ┌─────▼─────
    │    S1
    │     │
    │    S2
    │     │
    │    S3
    │     │
    │    S4
    │     │
  n │    S5 ◇
    │     │ j
    │    S6
    │     │
    │    S7
    │     │
    │    S8
    │     │
        ENDE
```

**FIG. 2**

GCS

LM1

TVS

z

V

OS

TSLM1

y

TGZV

x

GZ

**FIG. 3**

LM1

D

LM2

$E_{TSLMi}$

TSLM1

TSLM2

V

OS

**FIG. 4**

V(P3)

LM1

D

LM2

V(P2)

$E_{TGZV}$ (+ $E_{TVS}$)

$E_{TSLMi}$

V(P1)

OS

**FIG. 5**

LM2

$E_{TSLMi}$

V2(P2)

LM1

V1(P2)

V2(P1)

OS2

$E_{TGZV}$ + $E_{TVS}$

V1(P1)

OS1

**FIG. 6**

Europäisches Patentamt
European Patent Office
Office européen des brevets

## EUROPÄISCHER RECHERCHENBERICHT

**Nummer der Anmeldung**

EP 21 21 2923

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/271550 A1 (BREED DAVID S [US] ET AL) 5. September 2019 (2019-09-05) | 1,2,9,10 | INV. G01S7/48 |
| A | * Absätze [0057], [0395]; Abbildungen 1,2 * | 3-8 | G01C21/30 G01S13/86 G01S13/931 |
| | ----- | | G01S15/86 |
| X | EP 0 635 773 A2 (SIEMENS AG [DE]) 25. Januar 1995 (1995-01-25) | 1-10 | G01S15/931 G01S17/86 |
| | * Seite 3; Anspruch 1; Abbildung 1 * | | G01S17/931 |
| | ----- | | G06V20/58 G01S5/02 |

**RECHERCHIERTE SACHGEBIETE (IPC)**

G01S
G06K
G01C
G06V

Der vorliegende Recherchenbericht wurde für alle Patentansprüche erstellt

| Recherchenort | Abschlußdatum der Recherche | Prüfer |
|---|---|---|
| München | 22. April 2022 | Theißing, Nikolaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 2923

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2022

| Im Recherchenbericht angeführtes Patentdokument | Datum der Veröffentlichung | Mitglied(er) der Patentfamilie | Datum der Veröffentlichung |
|---|---|---|---|
| US 2019271550 A1 | 05-09-2019 | CN 109641538 A | 16-04-2019 |
| | | US 2019271550 A1 | 05-09-2019 |
| | | WO 2018017793 A1 | 25-01-2018 |
| EP 0635773 A2 | 25-01-1995 | DE 4324531 C1 | 01-12-1994 |
| | | EP 0635773 A2 | 25-01-1995 |
| | | ES 2138016 T3 | 01-01-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018218492 A1
- DE 102018212133 A1
- US 20200310460 A1
- EP 3643016 A1